# EUROPEAN PATENT APPLICATION

(11) **EP 1 115 214 A1**
(43) Date of publication of application: **11.07.2001**
(21) Application number: 00944323.5
(22) Date of filing: 07.07.2000
(51) Int. Cl.: H04B 1/16, H04N 5/44, G11B 31/00

(54) **RECEIVER AND METHOD OF RECEPTION**

(30) Priority: 09.07.1999 JP 19631299
(71) Applicant: Sony Corporation, Tokyo 141-0001 (JP)
(72) Inventor: YAMAMOTO, Noriyuki Sony Corporation, Tokyo 141-0001 (JP); INOUE, Hajime Sony Corporation, Tokyo 141-0001 (JP); YASUNISHI, Hiroshi Sony Corporation, Tokyo 141-0001 (JP); SAWAYA, Taku Sony Corporation, Tokyo 141-0001 (JP); MORINAGA, Takeo Sony Corporation, Tokyo 141-0001 (JP); IKEDA, Hiroya Sony Ichinomiya Corporation, Aichi 491-0192 (JP)
(74) Representative: Robinson, Nigel Alexander Julian
(86) International application number: JP0004534
(87) International publication number: WO0105043

(57) **Abstract**

The operability of an external apparatus can be enhanced. In the present invention, a digital signal accepting means accepts a digital signal to be supplied from the external apparatus or an analog signal accepting means accepts an analog signal to be supplied from the external apparatus, the accepted digital signal or the analog signal is output with graphics information for operation of the external apparatus generated by a generating means as required, by an output means. Even in the case where any of the digital signal and the analog signal is supplied from the external apparatus, the graphics information is output with it, and the external apparatus can be operated based on the graphics information. Therefore, it is possible to provide a receiving device and a receiving method which can enhance the operability of the external apparatus.

## Description

### Technical Field

The present invention relates to a receiving device and a receiving method, which are suitably applicable to a digital broadcast receiving system for receiving a digital broadcast, for example.

### Background Art

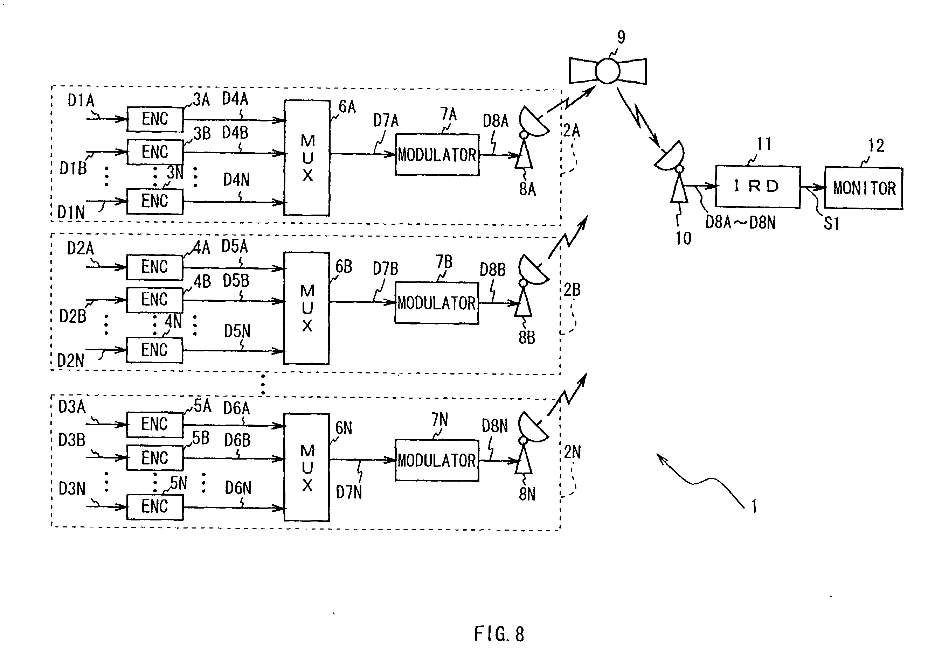

Conventionally, a digital broadcasting system 1 configured, for example, as shown in Fig. 8, was used to implement digital broadcasting.

In the digital broadcasting system 1, a plurality of transmitters 2A to 2N are provided on the transmission side. In each of the transmitters 2A to 2N, the digital video data D1A to D1N, D2A to D2N, D3A to D3N corresponding to a plurality of channels is compressed and encoded in accordance with the MPEG2 (Moving Picture Experts of Group Phase 2) by an encoding circuit 3A to 3N, 4A to 4N, 5A to 5N, the obtained encoded data is sequentially made into a TS (Transport Stream) packet for every unit, and the TS packet data D4A to D4N, D5A to D5N, D6A to D6N thus obtained is forwarded to a multiplexer 6A to 6N.

Each multiplexer 6A to 6N performs time-division multiplexing on the TS packet data D4A to D4N, D5A to D5N, D6A to D6N supplied thereto, the obtained multiplexed data D7A to D7N is modulated, for example, in accordance with the QPSK (Quadrature Phase Shift Keying) by a modulator 7A to 7N, and the transmitting data D8A to D8N thus obtained is transmitted sequentially via an antenna 8A to 8N and a broadcasting satellite 9 to the receiving side.

On the receiving side, a special receiving device 11 which is called an IRD (Integrated Receiver Decoder) receives the transmitting data D8A to D8N transmitted from the transmitter via an antenna 10 for digital broadcasting.

In this case, the receiving device 11 selectively demodulates the transmitting data D8A to D8N corresponding to a channel which has been designated (hereinafter referred to as a designation channel) from among the transmitting data D8A to D8N which have been received, and extracts the TS packet data D4A to D4N, D5A to D5N, D6A to D6N of the designation channel from among the obtained multiplexed data D7A to D7N to reconstruct the original encoded data.

And in the receiving device 11, the reconstructed encoded data is decoded to have the video data of the designation channel (hereinafter referred to as designation channel video data), which is then converted into analog form. An analog video signal thus obtained (hereinafter referred to as a designation channel video signal) S1 is forwarded to a monitor 12.

As a result, a program video of the designation channel (hereinafter referred to as a designation channel video) on the basis of this designation channel video signal S1 appears on the monitor 12, so that the viewer can watch a program video of a desired channel of the monitor 12.

Recently, a video tape recorder has been put into practical use which can record and reproduce a digital signal as well as the analog signal in one recorder (hereinafter referred to as a digital video tape recorder). And such a digital video tape recorder can also receive the television broadcasting now in operation.

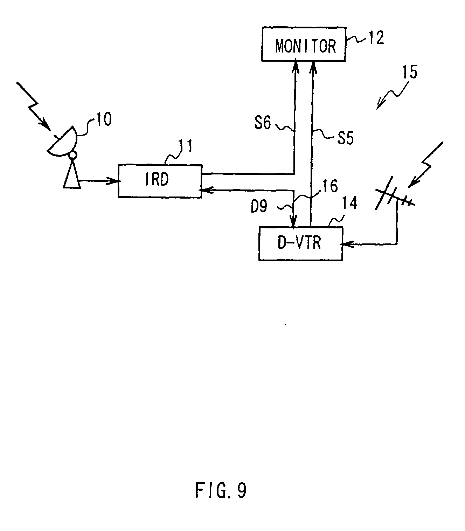

Hence, a digital broadcasting receiving system 15 may be constructed using this digital video tape recorder 14, an antenna 10, a receiving device 11, and a monitor 12, as shown in Fig. 9, wherein the digital video tape recorder 14 records and reproduces the digital broadcasting video data and the analog video signal of the television broadcasting.

In practice, in such a digital broadcasting receiving system 15, the digital broadcasting video data D9 which is received via the antenna 10 by the receiving device 11 is passed through a dedicated digital bus 16 to the digital video tape recorder 14 in a recording mode, thereby recording the video data D9 onto a video tape and also recording a video signal S5 of the television broadcasting which is received by the digital video tape recorder 14 onto this video tape.

In this digital video tape recorder 14, when the video data D9 is reproduced from the video tape in a reproducing mode, this video data D9 is passed through the bus 16 to the receiving device 11 for conversion into analog form and sent to the monitor 11. When the video signal S5 is reproduced from the video tape, this signal is directly sent to the monitor 12.

By the way, in such digital broadcasting receiving system 15, the video data D9 provided from the digital video tape recorder 14 may have the graphics data for displaying an operation panel superimposed thereon in the receiving device 11, and sent to the monitor 12 on which the video for this video data D9 and the operation panel are displayed in superimposition, in which the receiving device 11 controls the digital video tape recorder 14, based on an operation command selected and specified on this operation panel, resulting in the enhanced operability of the digital broadcasting receiving system 15.

However, in such digital broadcasting receiving system 15, since the video signal S5 reproduced in the digital video tape recorder 14 is sent directly to the monitor 12, the operation panel can not be superimposed on the video based on the video signal S5.

In order to allow the digital video tape recorder 14 to perform the operations such as a fast forward reproduction or a rewind reproduction in reproducing the video signal S5, it is necessary to use a remote controller for operation (hereinafter referred to as a remote control) dedicated for this digital video tape recorder 14, which caused a problem in that it is still too insufficient to enhance the operability of the digital broadcasting receiving system 15.

### Disclosure of Invention

The present invention has been achieved in view of the above aspects, and proposes receiving device which can enhance the operability of an external apparatus, and a method thereof.

To resolve the above-mentioned problem, the present invention provides receiving device for receiving the digital broadcasting comprising a digital signal accepting means for accepting a digital signal to be supplied from an external apparatus, an analog signal accepting means for accepting an analog signal to be supplied from the external apparatus, a generating means for generating graphics information for operation of the external apparatus, and an output means for outputting the digital signal accepted by the digital signal accepting means or the analog signal accepted by the analog signal accepting means with the graphics information, as required.

As a result, when any of the digital signal and the analog signal is supplied from the external apparatus, it can be output with the graphics information, so that the external apparatus can be operated based on the graphics information.

Also, the present invention provides a receiving method for receiving the digital broadcast, comprising a first step of accepting a digital signal to be supplied from an external apparatus, or accepting an analog signal to be supplied from the external apparatus, and a second step of outputting the digital signal or the analog signal accepted at the first step with graphics information for operation of the external apparatus, as required.

As a result, when any of the digital signal and the analog signal is supplied from the external apparatus, it can be output with the graphics information, so that the external apparatus can be operated based on the graphics information.

### Brief Description of Drawings

Fig. 1 is a block diagram showing the first embodiment of a configuration of a digital broadcasting receiving system according to the present invention.

Fig. 2 is a schematic diagram showing a configuration of an operation screen displayed on a monitor.

Fig. 3 is a block diagram showing a configuration of the digital broadcasting receiving system according to the second embodiment.

Fig. 4 is a block diagram showing a configuration of the digital broadcasting receiving system according to the third embodiment.

Fig. 5 is a block diagram showing a configuration of the digital broadcasting receiving system according to the fourth embodiment.

Fig. 6 is a schematic conceptual diagram for use in explaining a panel composite designation channel video signal.

Fig. 7 is a block diagram showing a configuration of the digital broadcasting receiving system according to the fifth embodiment.

Fig. 8 is a block diagram showing a configuration of a conventional digital broadcasting system.

Fig. 9 is a block diagram showing a configuration of a conventional digital broadcasting receiving system.

### Best Mode for Carrying Out the Invention

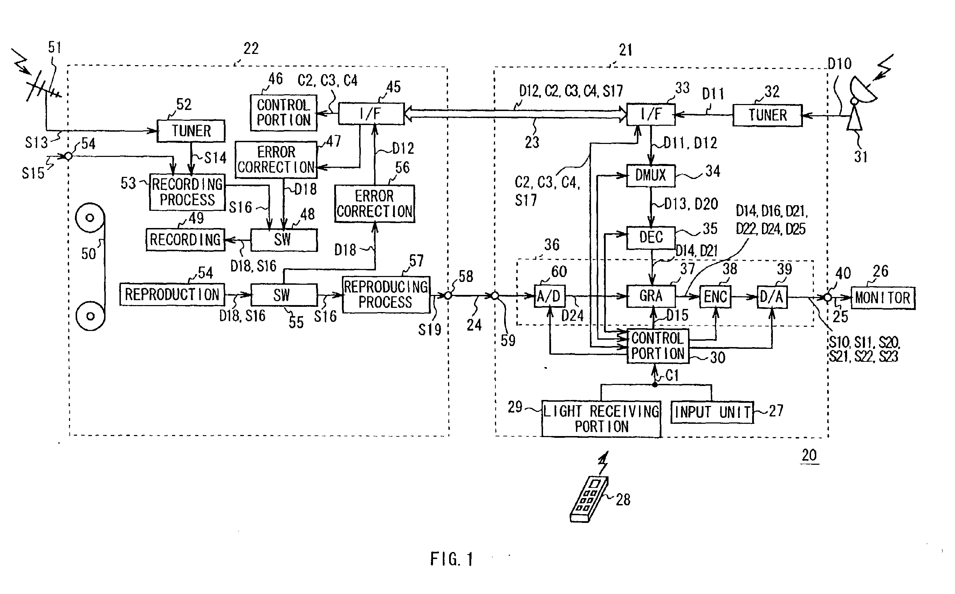

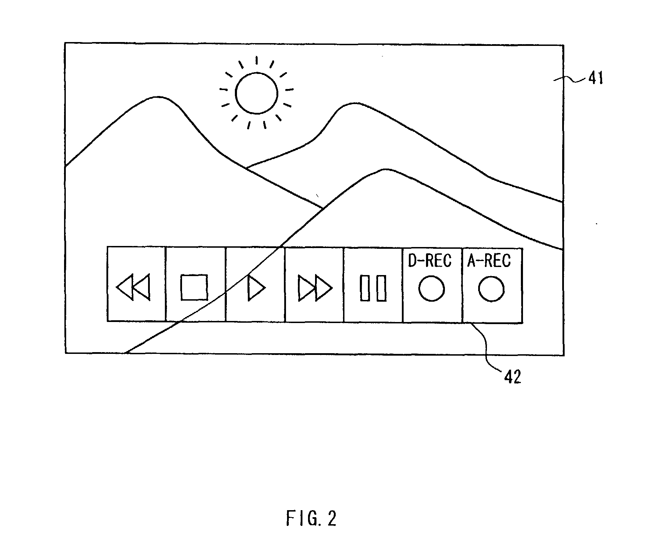

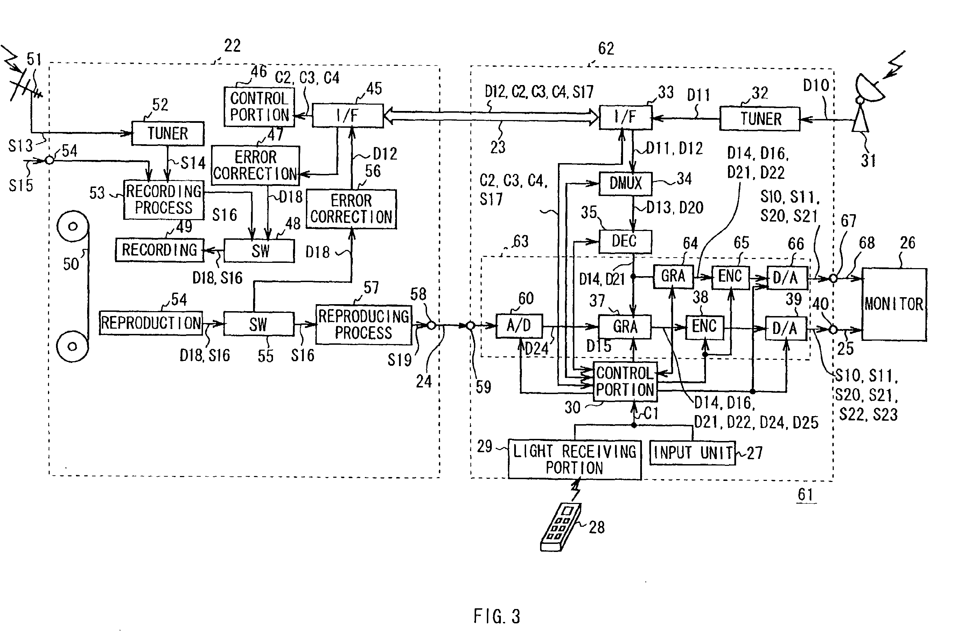

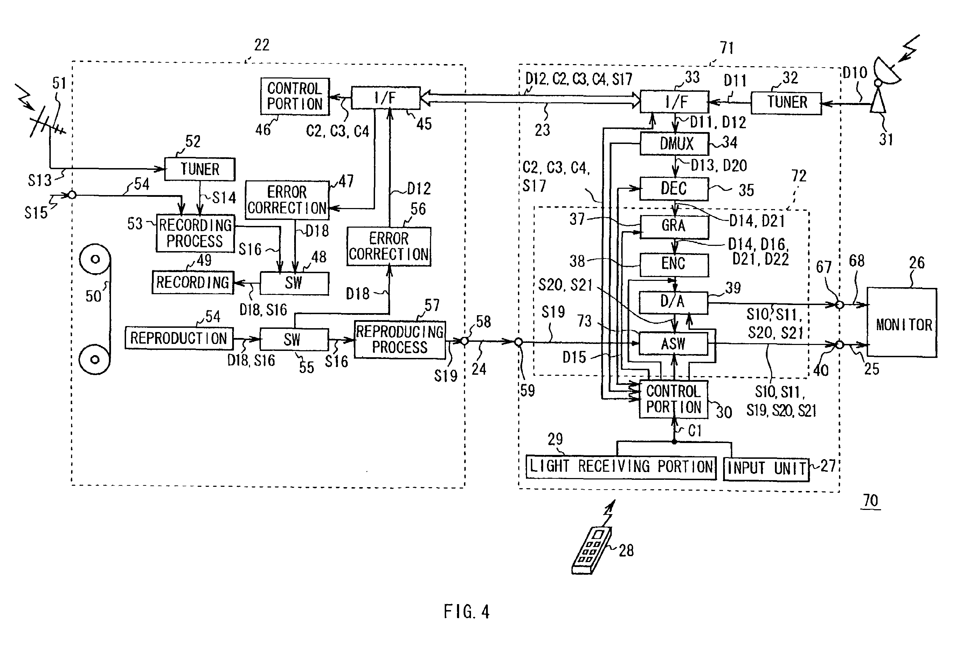

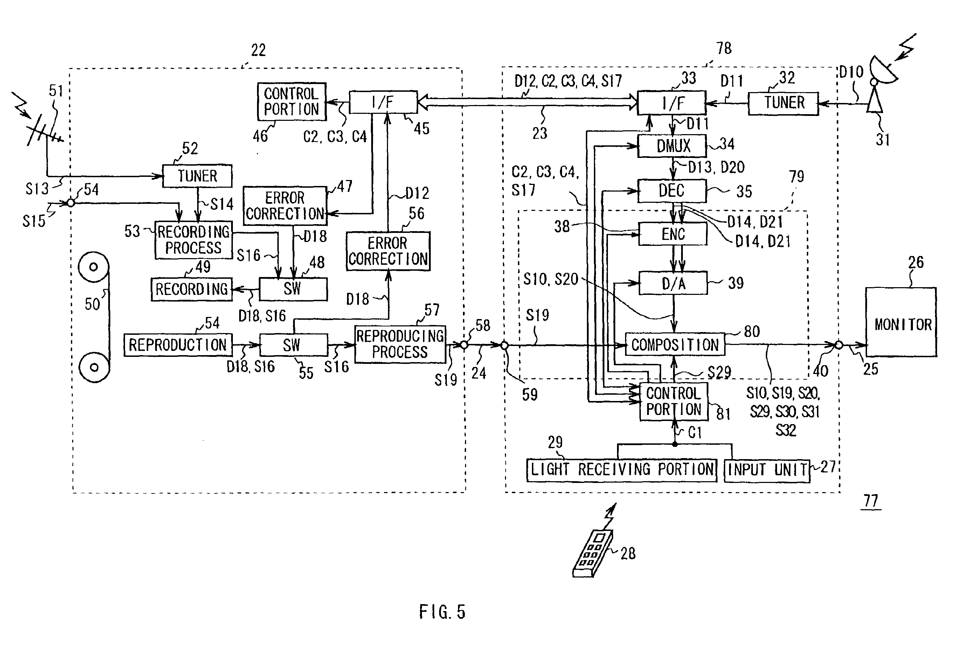

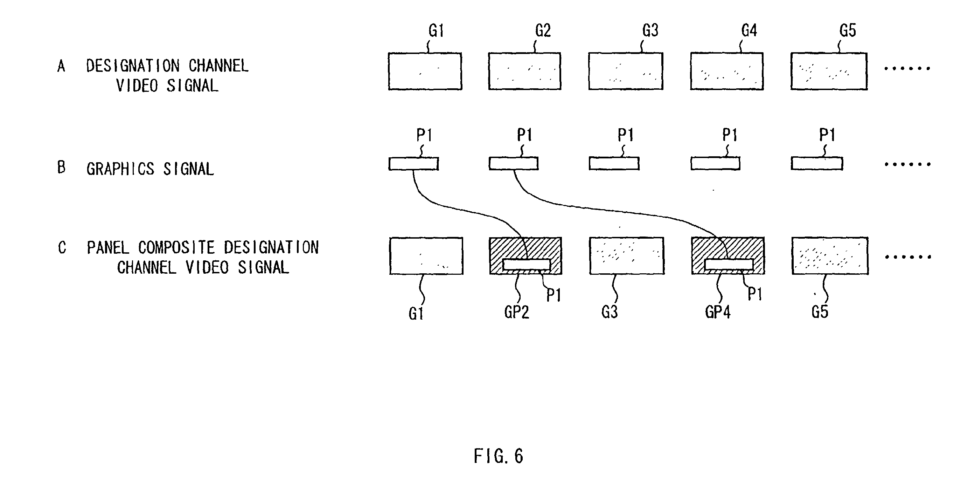

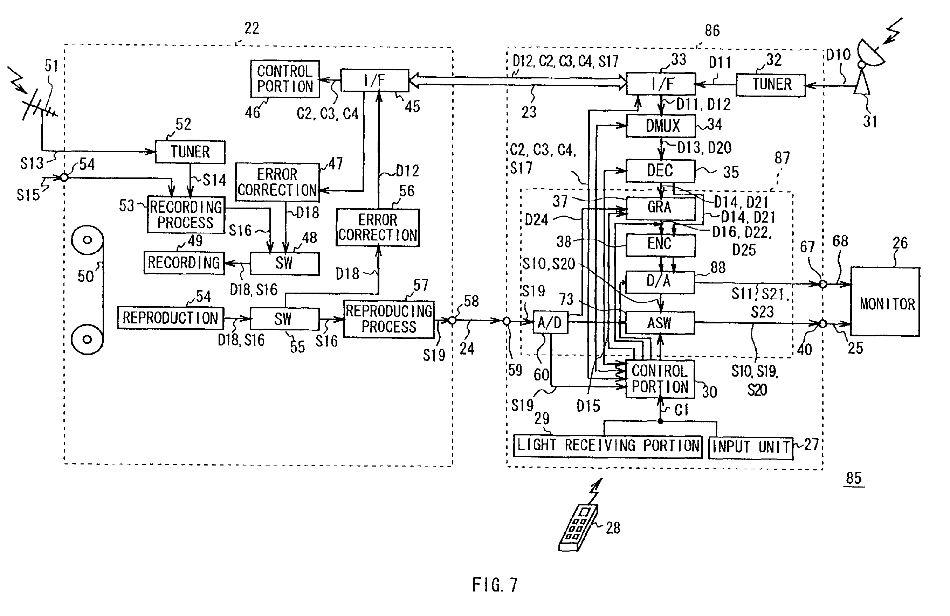

One embodiment of the present invention will be described below with reference to the drawings.
(1) First embodiment
   (1-1) Configuration of a digital broadcasting receiving system according to the first embodiment
      In Fig. 1, reference numeral 20 denotes a digital broadcasting receiving system to which the present invention is applied as a whole, in which a receiving device 21 and a digital video tape recorder 22 are connected through a bi-directional bus 23 of the IEEE (Institute of Electrical and Electronics Engineers) 1394 standards and a first cable for analog 24, and the receiving device 21 is connected with a second cable for analog 25 to a monitor 26.
      This receiving device 21 is provided with an input portion 27 consisting of a variety of operation buttons and a light receiving portion 29 for receiving an optical signal emitted from a remote control 28 on the front face of a housing. The viewer can use the input portion 27 and the remote control 28 to give a variety of operation commands such as designating a channel, to a control portion 30.
      In a recording mode, this receiving device 21 uses a tuner 32 to receive the transmission data D10 which is transmitted via a broadcasting satellite from a plurality of transmitters, not shown, via an antenna 31 for digital broadcasting.
      The tuner 32 selectively demodulates the transmission data D10 corresponding to a designation channel from among the transmission data D10 received, decrypts the data D10, based on a predefined encryption key which has been stored therein, and forwards the multiplexed data D11 thus obtained to an interface circuit 33 of the IEEE 1394 standards.
      The interface circuit 33 sends the multiplexed data D11 provided from the tuner 32 to a multiplexer 34, separates and extracts some TS packet data D12 of a designation channel from among the TS packet data D12 corresponding to multiple channels which are contained in the multiplexed data D11, and sends it sequentially through the bi-directional bus 23 to the digital video tape recorder 22, under the control of the control portion 30.
      A demultiplexer 34 separates and extracts some TS packet data D12 of a designation channel from among the TS packet data D12 corresponding to multiple channels which are contained in the multiplexed data D11 provided from the interface circuit 33, reconstructs the original encoded data D13, based on the extracted TS packet data D12, and sends it to a decoding circuit 35, under the control of the control portion 30.
      The decoding circuit 35 decodes the encoded data D13 provided from the demultiplexer 34, under the control of the control portion 30, the designation channel video data D14 of component form is sent via a first graphics processing circuit 37 to a first encoder 38 in an output processing portion 36.
      The first encoder 38 converts the designation channel video data D14 provided from the first graphics processing circuit 37 into the data of composite form based on NTSC, for example, and sends it to a first digital/analog converter 39 which converts this data of NTSC composite form into analog form, under the control of the control portion 30, so that a designation channel video signal S10 that has been obtained is sent sequentially via a first external output terminal 40 and the second cable 25 to the monitor 26.
      Then, the designation channel video of this designation channel video signal S10 appears on the monitor 26. The viewer can watch the video of a desired channel of the monitor 26.
      When the viewer makes an operation panel display command using the input portion 27 or the remote control 28 in a state where the designation channel video is displayed on the monitor 26, the control portion 30 reads out the graphics data D15 for display of a predetermined operation panel which has been stored, from an internal memory, and sends it to the first graphics processing circuit 37.
      In this case, the first graphics processing circuit 37 superimposes the graphics data D15 on the designation channel video data D14 provided from the decoding circuit 35 under the control of the control portion 30, the obtained superimposed data D16 (hereinafter referred to as designation channel superimposed data) being transformed into the data of NTSC composite form by the first encoder 38, and the data of composite form being converted into analog form by the first digital/analog converter 39. Consequently, a superimposed signal S11 (hereinafter referred to as a designation channel superimposed signal) is sent via the first external output terminal 40 and the second cable 25 to the monitor 26.
      As a result, the designation channel video 41 and an operation panel 42 including various operation buttons (rewind, stop, play back, fast forward, suspend, digital recording, analog recording) superimposed thereon is displayed, based on the designation channel superimposed signal S11, on the monitor 26, as shown in Fig. 2.
      In this connection, the operation panel 42 has the transparency to prevent the visibility from being impaired in the region superimposed on the designation channel video 41. A variety of operation buttons on the operation panel 42 can be selected and designated using a cursor key or a decision button, for example, provided on the input portion 27 or the remote control 28.
      Thereby, upon an operation button being selected on this operation panel 42, the control portion 30 sends an operation command corresponding to this selected operation button via the interface circuit 33 and the bi-directional bus 23 to the digital video tape recorder 22, and controls the digital video tape recorder 22 to perform the corresponding operation, based on this operation command.
      In practice, in the digital video tape recorder 22, if there is provided an operation command C2 for the digital recording or an operation command C3 for the analog recording through the bi-directional bus 23 from the receiving device 21, it is accepted via an interface circuit 45 in accordance with the IEEE 1394 standards into a control portion 46.
      As a result, the control portion 46 controls the whole of the digital video tape recorder 22, based on this digital recording command C2 or the analog recording command C3, to perform the digital recording or the analog recording.
      In practice, if the digital recording command C2 is provided from the receiving device 21, the control portion 46 controls the TS packet data D12 provided through the bi-directional bus 23 from the receiving device 21 to be accepted via the interface circuit 45 into an error correcting circuit 47.
      The error correcting circuit 47 generates an error correction code, based on the TS packet data D12 accepted via the interface circuit 45, and appends it to the corresponding TS packet data D12. And the TS packet data D12 having this error correction code appended thereto is converted into a predetermined format for recording, and the recording TS packet data D18 is sent via a switch circuit 48 to a recording head 49.
      Thereby, the recording TS packet data D18 is then recorded by this recording head 49 on a video tape 50.
      Also, in the digital video tape recorder 22, a transmitting signal S13 corresponding to multiple channels for the analog television broadcasting is received via an antenna 51 for the television broadcasting through a tuner 52.
      If an analog recording command C3 is provided from the receiving device 21, the control portion 46 controls the tuner 52, based on this analog recording command C3. Then, the tuner 52 selectively demodulates the transmitting signal S13 of designation channel from among the transmitting signals S13 corresponding to multiple channels which have been received, and sends a video signal S14 of obtained component type to a recording processing circuit 53.
      The recording processing circuit 53 subjects the video signal S14 provided from the tuner 52 to predetermined signal processing for recording, and then sends a video signal S16 that has been obtained via the switch circuit 48 to the recording head 49, so that the video signal S16 can be recorded on the video tape 50 by the recording head 49.
      By the way, in this digital video tape recorder 22, a video signal S15 provided from the outside can be accepted via an external input terminal 54 into the recording processing circuit 53.
      Accordingly, if an analog recording command C3 for recording the video signal S15 provided from the outside is made from the receiving device 21, the control portion 46 controls the signal processing circuit 53, based on this analog recording command C3.
      The recording processing circuit 53 subjects the video signal S15 provided from the external input terminal 54 to predetermined signal processing for recording, and then sends a video signal S16 obtained via the switch circuit 48 to the recording head 49, which enables the video signal S16 to be recorded on the video tape 50.
      Thus, in this digital broadcasting receiving system 20, if an operation button for recording is selected on the operation panel 42 displayed on the monitor 26, as required, the receiving device 21 gives a corresponding operation command to the digital video tape recorder 22, and then the digital video tape recorder 22 is controlled based on this operation command, so that the digital recording TS packet data D18 and the analog video signal S16 can be recorded on the video tape 50.
      On the other hand, in the receiving device 21, if an operation button for reproduction is selected on the operation panel 42 displayed on the monitor 26 in a reproducing mode, the control portion 30 controls to send a corresponding reproduction command C4 via the interface circuit 33 and the bi-directional bus 23 to the digital video tape recorder 22.
      In this case, in the digital video tape recorder 22, if a reproduction command C4 is provided through the bi-directional bus 23 from the receiving device 21, it is accepted via the interface circuit 45 into the control portion 46.
      As a result, the control portion 46 controls the whole of the digital video tape recorder 22, based on this reproduction command C4, to perform the digital reproduction and the analog reproduction.
      In practice, the control portion 46 controls a reproducing head 54 to reproduce the recording TS packet data D18 and the video signal S16 which are recorded on the video tape 50 in the recorded order.
      In a case where the recording TS packet data D18 is reproduced from the video tape 50 by the reproducing head 54, this recording TS packet data D18 is sent via the switch circuit 55 to the error correcting circuit 56.
      And the error correcting circuit 56 transforms this recording TS packet data D18 into an original format, and then performs the error correction, based on an error correction code appended thereto. The resulting original TS packet data D12 is sent sequentially to the interface circuit 45.
      If the interface circuit 45 has the TS packet data D12 passed from the error correcting circuit 56, it sends the sending start information S17 indicating the start of sending this TS packet data D12, through the bi-directional bus 23 to the receiving device 21, then sends the TS packet data D12 through the bi-directional bus 23 to the receiving device 21, and when sending this TS packet data D12 is ended, it sends the sending end information S18 indicating the end of sending the TS packet data D12 through the bi-directional bus 23 to the receiving device 21,.
      In a case where a video signal S16 from the video tape 50 is reproduced by the reproducing head 54, this video signal S16 is sent via the switch circuit 55 to a reproducing processing circuit 57.
      And the reproducing processing circuit 57 subjects this video signal S16 to a predetermined regenerative process, a video signal S19 that has been obtained (referred to as an analog reproduced video signal) is sent via an external output terminal 58 and the first cable 24 to the receiving device 21.
      On the start of sending the analog reproduced signal S19 to the receiving device 21, the control portion 46 sends the sending start information indicating the start of sending this analog reproduced signal S19, from the interface circuit 45 through the bi-directional bus 23 to the receiving device 21.
      On termination of sending the analog reproduced signal S19 to the receiving device 21, the control portion 46 sends the sending end information indicating the end of sending this analog reproduced signal S19, from the interface circuit 45 through the bi-directional bus 23 to the receiving device 21.
      In this way, the digital video tape recorder 22 allows both the TS packet data D12 reproduced from the video tape 50 and the analog reproduced video signal S19 to be sent to the receiving device 21.
      In the receiving device 21, the sending start information S17 sent through the bi-directional bus 23 from the digital video tape recorder 22 is accepted via the interface circuit 33 into the control portion 30, when the digital reproduction is performed in the digital video tape recorder 22.
      And the control portion 30 controls the interface circuit 33, based on this sending start information S17, so that the interface circuit 33 may accept the TS packet data D12 sent subsequently through the bi-directional bus 23 from this digital video tape recorder 22, and send the TS packet data D12 accepted to the demultiplexer 34.
      The demultiplexer 34 reconstructs the original encoded data D20 based on the TS packet data D12 passed via the interface circuit 33 under the control of the control portion 30, and sends it to the decoding circuit 35.
      And the decoding circuit 35 decodes the encoded data D20 passed from the demultiplexer 34 under the control of the control portion 30, the video data of component type D21 (hereinafter referred to as digital reproduced video data) is sent to the first graphics processing circuit 37.
      When there is no request from the viewer to display the operation panel 42, the first graphics processing circuit 37 sends the digital reproduced video data D21 provided from the decoding circuit 35 to the first encoder 38 for conversion into the NTSC composite type data, which is then converted into analog form in the first digital/analog converter 39. The obtained digital reproduced video signal S20 is sent sequentially via the first external output terminal 40 and the second cable 25 to the monitor 26.
      On the contrary, when there is a request from the viewer to display the operation panel 42, the first graphics processing circuit 37 superimposes the graphics data D15 on the digital reproduced video data D21 provided from the decoding circuit 35. The obtained superimposed data D22 (hereinafter referred to as digital reproduced superimposed data) is sent to the first encoder 38 for conversion into the NTSC composite type data, which is then converted into analog form in the first digital/analog converter 39. A superimposed signal S21 that has been obtained (hereinafter referred to as a digital reproduced superimposed signal) is sent sequentially via the first external output terminal 40 and the second cable 25 to the monitor 26.
      Then, only the digital reproduced video based on the digital reproduced video signal S20 appears on the monitor 26, or the digital reproduced video having the operation panel 42 superimposed thereon appears on the monitor 26, based on the digital reproduced superimposed signal S21, at the request of the viewer.
      In this way, the control portion 30 controls the operation panel 42 together with the digital reproduced video to be displayed on the monitor 26, as required. When any of the operation buttons such as rewind, stop, play back, fast forward and suspend is selected on the operation panel 42, an operation command corresponding to a selected operation button is given to the digital video tape recorder 22, which is then controlled based on this operation command.
      In this receiving device 21, the analog reproduced video signal S19 passed via the first cable 24 from the digital video tape recorder 22 is accepted via an external input terminal 59 into an analog/digital converter 60, when the digital video tape recorder 22 performs the analog reproduction.
      And the analog/digital converter 60 converts the analog reproduced video signal S19 accepted into digital form to produce the video data D24 (hereinafter referred to as analog reproduced video data) having the same format as the designation channel video data D14 (or digital reproduced video data D21), which is then sent to the first graphics processing circuit 37.
      Then, on accepting the sending start information for the analog reproduced signal S19 passed from the digital video tape recorder 22 through the bi-directional bus 23, the control portion 30 controls the first graphics processing circuit 37 to process the data passed from the analog/digital converter 60, based on the sending start information.
      Thereby, when there is no request from the viewer to display the operation panel 42, the first graphics processing circuit 37 sends the reproduced video data D24 provided from the analog/digital converter 60, via the first encoder 38 (in this time, the first encode 38 does not perform any processing) to the first digital/analog converter 39 for conversion into analog form, in the same way as when the recording TS packet data D18 is reproduced. A video signal S22 that has been obtained (hereinafter referred to as an analog reproduced video signal) is sent via the first external output terminal 40 and the second cable 25 to the monitor 26.
      On the contrary, when there is a request from the viewer to display the operation panel 42, the first graphics processing circuit 37 superimposes the graphics data D15 on the reproduced video data D24 provided from the analog/digital converter 60. The obtained superimposed data D25 (hereinafter referred to as analog reproduced superimposed data) is sent via the first encoder 38 to the first digital/analog converter 39 for conversion into analog form. A superimposed signal S23 that has been obtained (hereinafter referred to as an analog reproduced superimposed signal) is sent via the first external output terminal 40 and the second cable 25 to the monitor 26.
      Then, only the analog reproduced video based on the analog reproduced video signal S22 appears on the monitor 26, or the analog reproduced video having the operation panel 42 superimposed thereon, based on the analog reproduced superimposed signal S23, appears on the monitor 26 at the request of the viewer.
      In this way, the control portion 30 controls the operation panel 42 together with the analog reproduced video to be displayed on the monitor 26, as required. When any of the operation buttons such as rewind, stop, play back, fast forward and suspend is selected, an operation command corresponding to a selected operation button is given to the digital video tape recorder 22. The digital video tape recorder 22 is controlled to perform the corresponding operation, based on this operation command.
      Thus, the control portion 30 controls the switching between a process path through a plurality of circuits involving processing the TS packet data D12 and a process path through a plurality of circuits involving processing the analog video signal S19 to perform the corresponding operation, based on the sending start information S17 sent from the digital video tape recorder 22, when the digital reproduction is performed in the digital video tape recorder 22 and the sending start information sent from the digital video tape recorder 22 when the analog reproduction is performed in the digital video tape recorder 22.
      It should be noted that in the first embodiment, the receiving device 21 and the digital video tape recorder 22 are connected in accordance with the IEEE1394 standards, in which there are defined an isochronous transmission mode of assuring a delay time of transmission in transmitting the data and an asynchronous transmission mode of assuring the transmission of data to the destination.
      Therefore, between the receiving device 21 and the digital video tape recorder 22, the data requiring the management of transmission time (TS packet data D12 or the like) is transmitted in accordance with the isochronous transmission mode, and the data requiring the assurance of data transmission (a variety of operation commands or the like) is transmitted in accordance with the asynchronous transmission mode. The transmission of data can be made more reliable.
   (1-2) Operation and effect of the first embodiment
      With the above configuration, in this digital broadcasting receiving system 20, the receiving device 21 sends the designation channel video data D14 which has been received, via the graphics processing circuit 37 to the monitor 26, with the graphics data D15 superimposed as required, in a reproducing mode. The monitor 26 displays the designation channel video having the operation panel 42 superimposed thereon as required.
      If a play back operation button is selected on the operation panel 42 displayed on the monitor 26, this receiving device 21 sends a reproduction command C4 via the interface circuit 33 and the bi-directional bus 23 to the digital video tape recorder 22, which is controlled to perform the digital reproduction and the analog reproduction.
      Herein, when the digital reproduction is performed in the digital video tape recorder 22, the receiving device 21 accepts the TS packet data D12 sent from the digital video tape recorder 22 via the bi-directional bus 23 and the interface circuit 33, and sends the digital reproduced video data D21 generated based on the TS packet data D12 via the first graphics processing circuit 37 to the monitor 26, with the graphics data D15 superimposed thereon as required.
      On the contrary, when the analog reproduction is performed in the digital video tape recorder 22, the receiving device 21 accepts the analog video signal S19 sent from the digital video tape recorder 22 via the external input terminal 59 into the first graphics processing circuit 37, the analog video signal S19 is passed to the monitor 26 with the graphics data D15 superimposed thereon as required.
      Accordingly, in this digital broadcasting receiving system 20, even when the analog video signal S19 is reproduced from the video tape 50 in the digital video tape recorder 22, the analog reproduced video based on this analog video signal S19 with the operation panel 42 superimposed can be displayed on the monitor 26.
      And while displaying the analog reproduced video with the operation panel 42 superimposed on the monitor 26, when a desired operation command is selected on this operation panel 42, the receiving device 21 can control the operation of the digital video tape recorder 22, based on the selected operation command.
      In this connection, in the conventional digital broadcasting receiving system 15 (Fig. 9), since the video signals S5 and S6 (Fig. 9) are provided through different input channels to a monitor 12 (Fig. 9), it is required to switch the input channel of the monitor 12 every time the digital reproduction or the analog reproduction is performed in the digital video tape recorder 14 (Fig. 9).
      By the way, in the digital broadcasting receiving system 20 according to the first embodiment, the digital reproduction and the analog reproduction are not performed at the same time in the digital video tape recorder 22, and the TS packet data D12 obtained in the digital reproduction and the analog video signal S19 obtained in the analog reproduction are introduced into the receiving device 21. Therefore, the receiving device 21 and the monitor 26 can be connected with a single cable 25. There is no need of switching the input channel in the monitor 26, leading to the enhanced operability for the digital broadcasting receiving system 20.
      With the above configuration, the receiving device 21 accepts the analog video signal S19 reproduced from the video tape 50 in the digital video tape recorder 22, via the external input terminal 59 and sends the analog video signal S19 accepted, with the graphics data D15 superimposed thereon as required, to the monitor 26. As a result, the video of the analog video signal S19 reproduced from the video tape 50 in the digital video tape recorder 22 with the operation panel 42 superimposed thereon can be displayed on the monitor 26, leading to the enhanced operability of the digital broadcasting receiving system.
(2) Second embodiment
   (2-1) Configuration of digital broadcasting receiving system according to a second embodiment
      Fig. 3, in which same numerals are attached to the corresponding parts of Fig. 1, shows a digital broadcasting receiving system 61 according to the second embodiment of the invention, which is configured in the same way as the digital broadcasting receiving system 20 according to the first embodiment, except for a receiving device 62.
      In this receiving device 62, a decoding circuit 35 sends the designation channel video data D14 to the first and second graphics processing circuits 37 and 64 in an output processor 63 in a recording mode.
      When there is no request from the viewer to display the operation panel, a first graphics processing circuit 37 does not perform any processing. Then it passes the designation channel video data D14 provided from the decoding circuit 35, to a first encoder 38 for conversion into the NTSC composite type data, under the control of a control portion 30, which is then converted into analog form in a first digital/analog converter 39. A designation channel video signal S10 that has been obtained is sent sequentially via a first external output terminal 40 and a second cable 25 to a first input channel of a monitor 26.
      On the contrary, when there is a request from the viewer to display the operation panel, the first graphics processing circuit 37 superimposes the graphics data D15 provided from the control portion 30 on the designation channel video data D14 provided from the decoding circuit 35, under the control of the control portion 30. The obtained designation channel superimposed data D16 is converted into the NTSC composite type data in the first encoder 38. The NTSC composite type data is then converted into analog form in the first digital/analog converter 39. A designation channel superimposed signal S11 that has been obtained is sent sequentially via the first external output terminal 40 and the second cable 25 to the first channel of the monitor 26.
      On the other hand, when there is no request from the viewer to display the operation panel, a second graphics processing circuit 64 does not perform any processing. Then, it passes the designation channel video data D14 provided from the decoding circuit 35, to a second encoder 65 for conversion into the NTSC composite type data, under the control of the control portion 30, which is then converted into analog form in a second digital/analog converter 66. A designation channel video signal S10 that has been obtained is sent sequentially via a second external output terminal 67 and a third cable 68 to a second input channel of the monitor 26.
      On the contrary, when there is a request from the viewer to display the operation panel, the second graphics processing circuit 64 superimposes the graphics data D15 provided from the control portion 30 on the designation channel video data D14 provided from the decoding circuit 35, under the control of the control portion 30. The obtained designation channel superimposed data D16 is converted into the NTSC composite type data in the second encoder 65. The NTSC composite type data is then converted into analog form in the second digital/analog converter 66. A designation channel superimposed signal S11 that has been obtained is sent sequentially via the second external output terminal 67 and the third cable 68 to the second input channel of the monitor 26.
      Thereby, the designation channel video based on the designation channel video signal S10 is displayed at the first and second channels corresponding to the first and second input channels on the monitor 26, or the designation channel video having the operation panel superimposed thereon based on the designation channel superimposed signal S11 is displayed on the monitor 26 at the request of the viewer.
      On the other hand, this receiving device 62 enables an interface circuit 33 to send the multiplexed data D11 provided from a tuner 32 via a demultiplexer 34 to the decoding circuit 35 in a reproducing mode. At the time of this operation, when the digital reproduction is performed in a digital video tape recorder 22, either one of this multiplexed data D11 and the TS packet data D12 provided from the digital video tape recorder 22, which has been selected by the viewer, is sent via the demultiplexer 34 to the decoding circuit 35.
      Consequently, the decoding circuit 35 decodes the encoded data D12 or D20 provided from the demultiplexer 34 and sends the designation channel video data D14 or the digital reproduced video data D21 to the first and second graphics processing circuit 37 and 64.
      When there is no request from the viewer to display the operation panel, the first graphics processing circuit 37 does not perform any processing. Then, it passes the designation channel video data D14 or the digital reproduced video data D21 provided from the decoding circuit 35 to the first encoder 38 for conversion into the NTSC composite type data, under the control of the control portion 30, which is then converted into analog form in the first digital/analog converter 39. A designation channel video signal S10 or a digital reproduced video signal S20 that has been obtained is sent sequentially via the first external output terminal 40 and the second cable 25 to the first input channel of the monitor 26.
      On the contrary, when there is a request from the viewer to display the operation panel, the first graphics processing circuit 37 superimposes the graphics data D15 on the designation channel video data D14 or the digital reproduced video data D21 provided from the decoding circuit 35, under the control of the control portion 30. The obtained designation channel superimposed data D16 or the digital reproduced superimposed data D22 is converted into the NTSC composite type data in the first encoder 38. The NTSC composite type data is then converted into analog form in the first digital/analog converter 39. A designation channel superimposed signal S11 or a digital reproduced superimposed signal S21 that has been obtained is sent sequentially via the first external output terminal 40 and the second cable 25 to the first input channel of the monitor 26.
      On the other hand, when there is no request from the viewer to display the operation panel, the second graphics processing circuit 64 does not perform any processing. Then, it passes the designation channel video data D14 or the digital reproduced video data D21 provided from the decoding circuit 35 to the second encoder 65 for conversion into the NTSC composite type data, under the control of the control portion 30, which is then converted into analog form in the second digital/analog converter 66. A designation channel video signal S10 or a digital reproduced video signal S20 that has been obtained is sent sequentially via the second external output terminal 67 and the third cable 68 to the second input channel of the monitor 26.
      On the contrary, when there is a request from the viewer to display the operation panel, the second graphics processing circuit 64 superimposes the graphics data D15 on the designation channel video data D14 or the digital reproduced video data D21 provided from the decoding circuit 35, under the control of the control portion 30. The obtained designation channel superimposed data D16 or the digital reproduced superimposed data D22 is converted into the NTSC composite type data in the second encoder 65. The NTSC composite type data is then converted into analog form in the second digital/analog converter 66. A designation channel superimposed signal S11 or a digital reproduced superimposed signal S21 that has been obtained is sent sequentially via the second external output terminal 67 and the third cable 68 to the second input channel of the monitor 26.
      Then, a selected one of the designation channel video based on the designation channel video signal S10 and the digital reproduced video based on the digital reproduced video signal S20 only appears on the first channel of the monitor 26, or a selected one of the designation channel video having the operation panel superimposed thereon based on the designation channel superimposed signal S11 and the digital reproduced video having the operation panel superimposed thereon based on the digital reproduced superimposed signal S21 appears on the monitor 26 at the request of the viewer.
      In addition, a selected one of the designation channel video based on the designation channel video signal S10 and the digital reproduced video based on the digital reproduced video signal S20 appears on the first channel and the second channel as well on the monitor 26, or a selected one of the designation channel video having the operation panel superimposed thereon based on the designation channel superimposed signal S11 and the digital reproduced video having the operation panel superimposed thereon based on the digital reproduced superimposed signal S21 appears on the monitor 26 at the request of the viewer.
      If the analog reproduction is performed in the digital video tape recorder 22, the interface circuit 33 enables the multiplexed data D11 provided from the tuner 32 to be sent sequentially via the demultiplexer 34 and the decoding circuit 35 to the second graphics processing circuit 64.
      Thereby, the second graphics processing circuit 64 superimposes the graphics data D15 on the designation channel video data D14 provided from the decoding circuit 35, as required, in the same way as in the recording mode described above. The obtained designation channel video data D14 or the designation channel superimposed data D16 thus is sent sequentially via the second encoder 65, the second digital/analog converter 66, the second external output terminal 67 and the third cable 68 to the second input channel of the monitor 26.
      Also, in the receiving device 62, the analog reproduced video signal S19 sent from the digital video tape recorder 22 is accepted sequentially via an external input terminal 59 and passed through an analog/digital converter 60 into the first graphics processing circuit 37.
      Thereby, when there is no request from the viewer to display the operation panel, the first graphics processing circuit 37 does not perform any processing. Then, it passes the reproduced video data D24 provided from the analog/digital converter 60 sequentially via the first encoder 38, the first digital/analog converter 39, the first external output terminal 40 and the second cable 25 to the first input channel of the monitor 26, under the control of the control portion 30.
      On the contrary, when there is a request from the viewer to display the operation panel, the first graphics processing circuit 37 superimposes the graphics data D15 on the analog reproduced video data D24 provided from the analog/digital converter 60, under the control of the control portion 30. The obtained analog reproduced superimposed data D25 is sent sequentially via the first encoder 38, the first digital/analog converter 39, the first external output terminal 40 and the second cable 25 to the first input channel of the monitor 26.
      Then, the analog reproduced video based on an analog reproduced video signal S22 appears on the first channel of the monitor 26, or the analog reproduced video having the operation panel superimposed thereon based on an analog reproduced superimposed signal S23 appears on the monitor 26 at the request of the viewer. And the designation channel video based on the designation channel video signal S10 appears on the second channel of the monitor 26, or the designation channel video having the operation panel superimposed thereon based on a designation channel superimposed signal S11 appears on the monitor 26 at the request of the viewer.
      In this way, in the reproducing mode, the designation channel video, with the operation panel superimposed thereon as required, can be displayed on the first channel of the monitor 26, and, any one of the designation channel video, the digital reproduced video and the analog reproduced video, with the operation panel superimposed thereon as required, can be displayed on the second channel of the monitor 26.
      In the digital broadcasting receiving system 61, even when the digital reproduction or the analog reproduction is performed in the digital video tape recorder 22 in the reproducing mode, the viewer can easily watch the designation channel video only by switching the channel of the monitor 26 without stopping the digital reproduction or the analog reproduction.
   (2-2) Operation and effect of the second embodiment
      With the above configuration, in this digital broadcasting receiving system 61, the receiving device 62 enables the designation channel video data D14 which has been received or the digital reproduced vide data D21 provided from the digital video tape recorder 22 with the graphics data D15 superimposed as required to be sent via the second graphics processing circuit 64 to the second input channel of the monitor 26, in the reproducing mode. On the second channel of the monitor 26, the designation channel video based on the designation channel video data D14 or the digital reproduced video based on the digital reproduced video data D21, is displayed, with the operation panel 42 superimposed thereon as required.
      In addition, in the receiving device 62, the designation channel video data D14 which has been received, the digital reproduced video data D21 or the analog reproduced video signal S19 provided from the digital video tape recorder 22 is sent with the graphics data D15 superimposed thereon as required, via the first graphics processing circuit 37 to the first input channel of the monitor 26. On the first channel of the monitor 26, the designation channel video based on designation channel video data D14, the digital reproduced video based on the digital reproduced video data D21, or the analog reproduced video based on the analog reproduced video signal S19 is displayed, with the operation panel superimposed thereon as required.
      Accordingly, in this digital broadcasting receiving system 61, the designation channel video can be always displayed on the second channel of the monitor 26. In the reproducing mode, the designation channel video, the digital reproduced video or the analog reproduced video can be displayed on the first channel of the monitor 26.
      Therefore, when the viewer wants to watch the designation channel video while the analog reproduced video is displayed on the first channel of the monitor 26, the viewer can easily watch the designation channel video only by switching the channel of the monitor 26, without giving the receiving device 21 an operation command of stopping the analog reproduction which is being performed in the digital video tape recorder 22. It is possible to realize the receiving device 21 having the enhanced operability.
      With the above configuration, in the receiving device 62, the designation channel video data D14, with the graphics data D15 superimposed thereon as required, is sent via the second graphics processing circuit 64 to the second input channel of the monitor 26, and the digital reproduced video data D21 or the analog reproduced video signal S19, with the graphics data D15 superimposed thereon as required, is sent via the first graphics processing circuit 37 to the first input channel of the monitor 26 in the reproduction mode. In addition to the effects of the first embodiment previously described, there is an effect that the viewer, who is watching the analog reproduced video in the reproducing mode, can watch the designation channel video only by switching the channel of the monitor 26. Thus it is possible to realize the digital broadcasting receiving system having the enhanced operability.
(3) Third embodiment
   (3-1) Configuration of digital broadcasting receiving system according to a third embodiment
      Fig. 4, in which same numerals are attached to the corresponding parts of Fig. 3, shows a digital broadcasting receiving system 70 according to the third embodiment of the invention, which is configured in the same way as the digital broadcasting receiving system 62 according to the second embodiment, except for a configuration of receiving device 71.
      In this receiving device 71, a decoding circuit 35 sends the designation channel video data D14 to a first graphics processing circuits 37 of an output processor 72 in a recording mode.
      When there is no request from the viewer to display the operation panel, the first graphics processing circuit 37 does not perform any processing. Then, it passes the designation channel video data D14 provided from the decoding circuit 35 to a first encoder 38 and to a first digital/analog converter 39, under the control of the control portion 30. A designation channel video signal S10 that has been obtained is sent via a second external output terminal 67 and a third cable 68 to the second input channel of a monitor 26. The designation channel video signal S10 is also sent sequentially via an analog switch 73, a first external output terminal 40 and a second cable 25 to the first input channel of the monitor 26.
      On the contrary, when there is a request from the viewer to display the operation panel, the first graphics processing circuit 37 superimposes the graphics data D15 on the designation channel video data D14 provided from the decoding circuit 35, under the control of the control portion 30. After passing the obtained designation channel superimposed data D16 through the first encoder 38 and the first digital/analog converter 39, the resultant designation channel superimposed signal S11 is sent sequentially via the second external output terminal 67 and the third cable 68 to the second input channel of the monitor 26. The designation channel video signal S10 is sent sequentially via the analog switch 73, the first external output terminal 40 and the second cable 25 to the first input channel of the monitor 26.
      Thereby, the designation channel video based on the designation channel video signal S10 is displayed on the first and second channels on the monitor 26, or the designation channel vide having the operation panel superimposed thereon based on the designation channel superimposed signal S11 is displayed at the request of the viewer.
      On the other hand, in this receiving device 62, an interface circuit 33 enables the multiplexed data D11 provided from a tuner 32 to be sent via a demultiplexer 34 and the decoding circuit 35 to the first graphics processing circuit 37 in a reproducing mode. At the time of this operation, when the digital reproduction is performed in a digital video tape recorder 22, either one of this multiplexed data D11 and the TS packet data D12 provided from the digital video tape recorder 22 which has been selected by the viewer is sent sequentially via the demultiplexer 34 and the decoding circuit 35 to the first graphics processing circuit 37.
      In this case, when there is no request from the viewer to display the operation panel, the first graphics processing circuit 37 does not perform any processing. Then, it passes the designation channel video data D14 provided from the decoding circuit 35 or the digital reproduced video data D21 to the first encoder 38 and to the first digital/analog converter 39. A designation channel video signal S10 or a digital reproduced video signal S20 that has been obtained is sent via sequentially the second external output terminal 67 and the third cable 68 to the second input channel of the monitor 26. The designation channel video signal S10 or the digital reproduced video signal S20 is sent sequentially via the analog switch 73, the first external output terminal 40 and the second cable 25 to the first input channel of the monitor 26.
      On the contrary, when there is a request from the viewer to display the operation panel, the first graphics processing circuit 37 superimposes the graphics data D15 on the designation channel video data D14 provided from the decoding circuit 35 or the digital reproduced video data D21, under the control of the control portion 30. After passing the obtained designation channel superimposed data D16 or the digital reproduced superimposed data D22 via the first encoder 38 and the first digital/analog converter 39, the resultant designation channel superimposed signal S11 or the resultant digital reproduced superimposed signal S21 is sent sequentially via the second external output terminal 67 and the third cable 68 to the second input channel of the monitor 26. The designation channel superimposed signal S11 or the digital reproduced superimposed signal S21 is sent sequentially via the analog switch 73, the first external output terminal 40 and the second cable 25 to the first input channel of the monitor 26.
      Thereby, a selected one of the designation channel video based on the designation channel video signal S10 and the designation channel video having the operation panel superimposed thereon based on the designation channel superimposed signal S11 at the request of the viewer is displayed on the first and second channels on the monitor 26, or a selected one of the digital reproduced video based on the digital reproduced video signal S20 and the digital reproduced video having the operation panel superimposed thereon based on the digital reproduced superimposed signal S21 at the request of the viewer is displayed on the monitor 26.
      If the analog reproduction is performed in the digital video tape recorder 22, the interface circuit 33 enables the multiplexed data D11 provided from the tuner 32 to be sent via the demultiplexer 34 and the decoding circuit 35 to the first graphics processing circuit 37.
      Thereby, the first graphics processing circuit 37 superimposes the graphics data D15 on the designation channel video data D14 provided from the decoding circuit 35, as required, in the same way as in the recording mode. The obtained designation channel video data D14 or the designation channel superimposed data D16 is sent sequentially via the first encoder 38 and the first digital/analog converter 39, and then sequentially via the second external output terminal 67 and the third cable 68 to the second input channel of the monitor 26, as well as to the analog switch 73.
      In the receiving device 71, an analog reproduced video signal S19 sent from the digital video tape recorder 22 is accepted via an external input terminal 59 into the analog switch 73.
      In the reproducing mode, if the analog reproduction is performed in the digital video tape recorder 22, the control portion 30 controls the analog switch 73 to be switched in accordance with the sending start information and the sending end signal of the analog reproduced signal S19 provided through the bi-directional bus 23 from the digital video tape recorder 22.
      That is, when the sending start information is given, the control portion 30 controls the analog reproduced signal S19 accepted via the external input terminal 59 into the analog switch 73 to be sent from this analog switch 73 sequentially via the first external output terminal 40 and the second cable 25 to the first input channel of the monitor 26.
      On the other hand, when the sending end information is given, the control portion 30 controls either one of the designation channel video signal S10 passed from the first digital/analog converter 39 and the designation channel superimposed signal S11, or either one of the digital reproduced video signal S20 and the designation channel superimposed signal S11, to be sent from the analog switch 73 sequentially via the first external output terminal 40 and the second cable 25 to the first input channel of the monitor 26.
      Thereby, when the analog reproduction is performed in the digital video tape recorder 22, the analog reproduced video based on the analog reproduced video signal S22 is displayed on the first channel of the monitor 26, and the designation channel video based on the designation channel video signal S10 or the designation channel video having the operation panel superimposed thereon based on the designation channel superimposed signal S11 at the request of the viewer is displayed on the second channel of the monitor 26.
      In this way, in this receiving device 71, the analog switch 73 is switched to normally transfer the data from the first digital/analog converter 39 to the first input channel of the monitor 26, but when the analog reproduction is performed in the digital video tape recorder 22 in the reproducing mode, the transfer of data from first digital/analog converter 39 to the first input channel of the monitor 26 is interrupted, based on the sending start information and the sending end information of the analog reproduced signal S19, so that the analog switch 73 may be switched to transfer the data from the external input terminal 59 to the first input channel of the monitor 26.
      Accordingly, in this receiving device 71, when the analog reproduction is performed in the digital video tape recorder 22, it is unnecessary to switch the overall processing path through a plurality of circuits involving processing the digital reproduced video signal S20 and the digital reproduced superimposed signal S21, as well as the analog reproduced video signal S19, unlike the receiving device 21 (Fig. 1) according to the first embodiment of 'the invention, resulting in the reduced processing of the control portion 30.
      In this connection, in this receiving device 71, when the analog reproduction is performed in the digital video tape recorder 22 in the reproducing mode, the analog reproduced video is displayed on the first channel of the monitor 26, and no operation panel is displayed.
      However, in this receiving device 71, as far as the designation channel video with the operation panel superimposed thereon is displayed on the second channel of the monitor 26, the operation panel for managing the digital video tape recorder 22 can be displayed on the monitor 26 only by switching the channel of the monitor 26 from the first channel to the second channel. Thus, it is possible to control the digital video tape recorder 22.
   (3-2) Operation and effect of the third embodiment
      With the above configuration, in this digital broadcasting receiving system 70, when the digital reproduction is performed in the digital video tape recorder 22 in the reproducing mode, the receiving device 71 enables either one of the digital reproduced vide data D21 provided through the bi-directional bus 23 from the digital video tape recorder 22 and the designation channel video data D14 received which is selected by the viewer to be sent sequentially via the first graphics processing circuit 37 and the first encoder 38 to the first digital/analog converter 39.
      And the receiving device 71 enables either one of the digital reproduced video signal S20 and the digital reproduced superimposed signal S21 provided in the first digital/analog converter 39, or either one of the designation channel video signal S10 and the designation channel superimposed signal S11 to be sent to the second input channel of the monitor 26, and to the first input channel of this monitor 26, via the analog switch 73.
      In addition, in the receiving device 71, when the analog reproduction is performed in the digital video tape recorder 22 in the reproducing mode, the control portion 30 controls the analog switch 73 to send the designation channel video data D14 which has been received, via the first graphics processing circuit 37 and the first encoder 38, as well as the first digital/analog converter 39 to the second input channel of the monitor 26. Further, the analog reproduced video signal S19 provided from this digital video tape recorder 22 is sent via the analog switch 73 to the first input channel of the monitor 26.
      Accordingly, in this digital broadcasting receiving system 70, when the analog reproduction is performed in the digital video tape recorder 22 in the reproducing mode, the control portion 30 in the receiving device 71 controls the analog switch 73 to switch between the designation channel video data D14 to be sent to the first input channel of the monitor 26 and the analog reproduced video signal S19. Therefore, there is no need of switching the whole process path through a plurality of circuits involving processing the digital produced video signal S20 and the digital reproduced superimposed signal S21, as well as the analog reproduced video signal S19, unlike the receiving device 21 (Fig. 1) of the digital broadcasting receiving system 20 (Fig. 1) according to the first embodiment of the invention, leading to reduced processing of the control portion 30.
      With the above configuration, in the receiving device 71, when the digital reproduction is performed in the digital video tape recorder 22 in the reproducing mode, the analog switch 73 is switched to send the analog reproduced video signal S19 provided from this digital video tape recorder 22, via this analog switch 73, to the first input channel of the monitor 26, and send the designation channel video data D14 received via the first graphics processing circuit 37, the first encoder 38 and the first digital/analog converter 39, to the second input channel of the monitor 26. In addition to the effects of the first and second embodiments of the invention, there is an effect that the processing of the control portion 30 can be reduced.
(4) Fourth embodiment
   (4-1) Configuration of digital broadcasting receiving system according to the fourth embodiment
      Fig. 5 in which same numerals are attached to the corresponding parts of Fig. 1 shows a digital broadcasting receiving system 77 according to the fourth embodiment of the invention, which is the same configuration as the digital broadcasting receiving system 20 according to the first embodiment of the invention, except for a configuration of receiving device 78.
      In this receiving device 78, in a recording mode, a decoding circuit 35 passes the designation channel video data D14 via a first encoder 38 and a first analog/digital converter 39 in an output processor 79. A designation channel video signal S10 that has been obtained is sent to a composition circuit 80.
      When there is no request from the viewer to display the operation panel, the composition circuit 80 does not perform any processing. Then, it sends the designation channel video signal S10 provided from the first digital/analog converter 39 via a first external output terminal 40 and a second cable 25 to a monitor 26 under the control of a control portion 81.
      Thereby, when there is no request from the viewer to display the operation panel, the designation channel video based on the designation channel video signal S10 appears on the monitor 26.
      On the contrary, when there is a request from the viewer to display the operation panel, the control portion 81 controls an analog graphics signal S29 for displaying the operation panel which has been stored in an internal memory to be read and sent to the composition circuit 80.
      Herein, the designation channel video based on the designation channel video signal S10 is constituted of a plurality of images G1 to G5 in units of frame (hereinafter referred to as a frame image), as shown in Figs. 6A to 6C. The composition circuit 80 makes a predetermined composition for this designation channel video signal S10 provided from the first digital/analog converter 39 in such a manner that the frame images G1, G3, G5 ... and the panel composite frame images GP2, GP4, ... produced by incorporating an operation panel image P1 based on the graphics signal S29 into the frame images, without changing the original order of arrangement and in such a way as to succeed alternately in due order. A panel composite designation channel video signal S30 that has been obtained is sent via the first external output terminal 40 and the second cable 25 to the monitor 26.
      Thereby, when there is a request from the viewer to display the operation panel, the designation channel video represented by the frame images and the designation channel video having the operation panel superimposed thereon represented by the panel composite frame images are alternately displayed in succession at high rate on the monitor 26, based on the panel composite designation channel video signal S30.
      Accordingly, this receiving device 78 can display the video on the monitor 26, as if a transparent operation panel were superimposed on the designation channel video, making use of the visual characteristics of the viewer.
      On the other hand, in this receiving device 78, when the digital reproduction is performed in a digital video tape recorder 22, the decoding circuit 35 sends the digital reproduced video data D21 provided via a bi-directional bus 23 from this digital video tape recorder 22 to pass through the first encoder 38 and the first digital/analog converter 39. A digital reproduced video signal S20 that has been obtained is sent to the composition circuit 80.
      When there is no request from the viewer to display the operation panel, the composition circuit 80 sends the digital reproduced video signal S20 provided from the first digital/analog converter 39 via the first external output terminal 40 and the second cable 25 to the monitor 26, in the same way as in the recording mode.
      On the contrary, when there is a request from the viewer to display the operation panel, the composition circuit 80 makes the composition processing for the digital reproduced video signal S20 provided from the first digital/analog converter 39, as in the recording mode. A panel composite digital reproduced video signal S31 that has been obtained is sent via the first external output terminal 40 and the second cable 25 to the monitor 26.
      Thereby, when there is no request from the viewer to display the operation panel, the digital reproduced video based on the digital reproduced video signal S20 is displayed on the monitor 26. Also, when there is a request from the viewer to display the operation panel, the digital reproduced video based on the panel composite digital reproduced video signal S31 is displayed on the monitor 26, as if a transparent operation panel were superimposed thereon.
      In the receiving device 78, when the digital reproduction is performed in the digital video tape recorder 22 in the reproducing mode, the analog reproduced video signal S19 provided from this digital video tape recorder 22 is accepted via the external input terminal 59 into the composition circuit 80.
      When there is no request from the viewer to display the operation panel, the composition circuit 80 accepts the analog reproduced video signal S19 via the external input terminal 59 and sends it via the first external output terminal 40 and the second cable 25 to the monitor 26.
      On the contrary, when there is a request from the viewer to display the operation panel, the composition circuit 80 performs the composition processing for the analog reproduced video signal S19 accepted via the external input terminal 59 in the same way as in the recording mode, and sends a panel composite analog reproduced video signal S32 obtained via the first external output terminal 40 and the second cable 25 to the monitor 26.
      Thereby, when there is no request from the viewer to display the operation panel, the analog reproduced video based on the analog reproduced video signal S19 is displayed on the monitor 26. Also, when there is a request from the viewer to display the operation panel, the analog reproduced video based on the panel composite analog reproduced video signal S32 is displayed as if a transparent operation panel were superimposed thereon.
      Accordingly, in this digital broadcasting receiving system 77, when there is a request from the viewer to display the operation panel in the reproducing mode, the digital reproduced video and the analog reproduced video with the operation panel superimposed thereon can be displayed on the monitor 26 by making use of the visual characteristic of the viewer.
   (4-2) Operation and effect of a fourth embodiment
      With the above configuration, in this digital broadcasting receiving system 77, when there is a request to display the operation panel, the composition circuit 80 makes the composition processing of the graphics signal S29 for the designation channel video signal S10, the digital reproduced video signal S20 and the analog reproduced video signal S19 in the receiving device 78. A panel composite designation channel video signal S30, a panel composite digital reproduced video signal S31 or a panel composite analog reproduced video signal S32 which have been obtained is sent to the monitor 26.
      Accordingly, in this digital broadcasting receiving system 77, since the graphics signal S29 is artificially superimposed on the analog signal as well in the above way, the output processor 79 of the receiving device 78 can be configured excluding the analog/digital converter 60 (Fig. 1), unlike the output processor 36 (Fig. 1) of the receiving device 21 (Fig. 1) according to the first embodiment of the invention. The output processor 79 in the receiving device 78 can be thus simplified in the circuit configuration.
      With the above configuration, in the receiving device 78, when there is a request to display the operation panel, the composition circuit 80 makes the composition processing of the graphics signal S29 for the designation channel video signal S30, the digital reproduced video signal S31 and the analog reproduced video signal S32 to be sent to the monitor 26. Thus, in addition to the effects of the first embodiment of the invention, there is an effect that the receiving device 78 can be simplified in the circuit configuration.
(5) Fifth embodiment
   (5-1) Configuration of digital broadcasting receiving system according to the fifth embodiment
      Fig. 7 in which like numerals are attached to the corresponding parts of Fig. 4 shows a digital broadcasting receiving system 85 according to the fifth embodiment of the invention, which is configured in the same way as the digital broadcasting receiving system 70 according to the third embodiment of the invention, except for a configuration of receiving device 86.
      In this receiving device 86, a decoding circuit 35 sends the designation channel video data D14 to a first graphics processing circuits 37 of an output processor 87 and via a first encoder 38 to a second digital/analog converter 88 in a recording mode.
      The first graphics processing circuit 37 superimposes the graphics data D15 provided from a control portion 30 on the designation channel video data D14 provided from the decoding circuit 35. The obtained designation channel superimposed data D16 is sent via the first encoder 38 to the third digital/analog converter 88.
      The third digital/analog converter 88 converts the designation channel video data D14 provided from the decoding circuit 35 into analog form, under the control of the control portion 30. A designation channel video signal S10 that has been obtained is sent sequentially via an analog switch 73, and a first external output terminal 40 and a second cable 25 to the first input channel of the monitor 26.
      Also, the third digital/analog converter 88 converts the designation channel superimposed data D16 provided from the first graphics processing circuit 37 into analog form, under the control of the control portion 30. A designation channel superimposed signal S11 that has been obtained is sent via a second external output terminal 67 and a third cable 68 to the second input channel of the monitor 26.
      Thereby, the designation channel video based on the designation channel video signal S10 is displayed on the first channel of the monitor 26, and the designation channel video with the operation panel superimposed thereon based on the designation channel superimposed signal S11 is displayed on the second channel of the monitor 26 in the recording mode.
      Accordingly, in this receiving device 86, the viewer can watch the designation channel video without the operation panel superimposed or the designation channel video with the operation panel superimposed thereon only by switching the channel of the monitor 26, even if the viewer does not specifically request the display of the operation panel.
      On the other hand, in the receiving device 86, when the digital reproduction is performed in the digital video tape recorder 22 in a reproducing mode, the decoding circuit 35 sends the digital reproduced video data D21 provided through a bi-directional bus 23 from this digital video tape recorder 22 to the first graphics processing circuit 37 and via the first encoder 38 to the second digital/analog converter 88.
      The first graphics processing circuit 37 superimposed the graphics data D15 provided from the control portion 30 on the digital produced video data D21 provided from the decoding circuit 35. The obtained digital reproduced superimposed data D22 is sent to the third digital/analog converter 88.
      And the third digital/analog converter 88 converts the digital reproduced video data D21 provided from the decoding circuit 35 into analog form under the control of the control portion 30. A digital reproduced video signal S20 that has been obtained is sent sequentially via the analog switch 73, the first output terminal 40 and the second cable 25 to the first input channel of the monitor 26.
      Also, the third digital/analog converter 88 converts the digital reproduced superimposed data D22 provided from the first graphics processing circuit 37 into analog form under the control of the control portion 30. A digital reproduced superimposed signal S21 that has been obtained is sent sequentially via the second external output terminal 67 and the third cable 68 to the monitor 26.
      Thereby, the digital reproduced video based on the digital reproduced video signal S20 is displayed on the first channel of the monitor 26, and the digital reproduced video with the operation panel superimposed thereon based on the digital reproduced superimposed signal S21 is displayed on the second channel of the monitor 26.
      Accordingly, in this receiving device 86, while the digital reproduction is performed in the digital video tape recorder 22, the viewer can watch the digital reproduced video without the operation panel superimposed or the digital reproduced video with the operation panel superimposed thereon by switching the channel of the monitor 26, even if the viewer does not specifically request the display of the operation panel.
      Also in the receiving device 86, when the analog reproduction is performed in the digital video tape recorder 22 in the reproducing mode, an analog reproduced video signal S19 provided from this digital video tape recorder 22 is accepted via an external input terminal 59 and sent sequentially via the analog switch 73 and the first external output terminal 40 and the second cable 25 to the first input channel of the monitor 26.
      In addition, in the receiving device 86, the analog reproduced video signal S19 provided from this digital video tape recorder 22 is accepted via the external input terminal 59 into an analog/digital converter 60, which converts this analog reproduced video signal S19 into digital form. The obtained analog reproduced video data D24 is sent to the first graphics processing circuit 37.
      The first graphics processing circuit 37 superimposes the graphics data D15 provided from the control portion 30 on the analog reproduced video data D24 provided from the analog/digital converter 60. The obtained analog reproduced superimposed data D25 is sent via the first encoder 38 to the third digital/analog converter 88.
      And the third digital/analog converter 88 converts the analog reproduced superimposed data D25 provided from the first graphics processing circuit 37 into analog form under the control of the control portion 30. An analog reproduced superimposed signal S23 that has been obtained is sent sequentially via the second external output terminal 67 and the third cable 68 to the second input channel of the monitor 26.
      Thereby, the analog reproduced video based on the analog reproduced video signal S19 is displayed on the first channel of the monitor 26, and the analog reproduced video with the operation panel superimposed thereon based on the analog reproduced superimposed signal S23 is displayed on the second channel of the monitor 26.
      Accordingly, in this receiving device 86, when the analog reproduction is performed in the digital video tape recorder 22, the viewer can watch the analog reproduced video without the operation panel superimposed or the analog reproduced video with the operation panel superimposed thereon by switching the channel of the monitor 26, even if the viewer does not specifically request the display of the operation panel.
      In this connection, in this receiving device 86, the control portion 30 controls the analog switch 73 to be switched, based on the sending start information S17 and the sending end information S18 for the digital reproduced video data D21 which is passed through the bi-directional bus 23 from the digital video tape recorder 22, as well as the sending start information and the sending end information for the analog reproduced video signal S19, so as to send the signal passed from the third digital/analog converter 88 to the first input channel of the monitor 26, or the signal accepted via the external input terminal 59 to the first input channel of the monitor 26.
   (5-2) Operation and effect of a fifth embodiment
      With the above configuration, in this digital broadcasting receiving system 85, the receiving device 86 enables the designation channel video signal S10, the digital reproduced video signal S20 and the analog reproduced video signal S19 to be sent to the first input channel of the monitor 26 via the analog switch 73, and enables the designation channel video data D14, the digital reproduced video data D21 and the analog reproduced video data D24 to have the graphics data D15 superimposed thereon in the first graphics processing circuit 37 and then to be sent via the first encoder 38 and the third digital/analog converter 88 to the second input channel of the monitor 26.
      Accordingly, in this digital broadcasting receiving system 85, the designation channel video, the digital reproduced video and the analog reproduced video without the operation panel superimposed can be displayed on the first channel of the monitor 26, and the designation channel video, the digital reproduced video and the analog reproduced video with the operation panel superimposed can be displayed on the second channel of the monitor 26. The operation panel can be easily displayed on the monitor 26 only by switching the channel of the monitor 26.
      Also, in this digital broadcasting receiving system 85, when there is a request that the designation channel video data D14, the digital reproduced video data D21 and the analog reproduced video signal S19 are recorded on a video tape of another video tape recorder, the first external output terminal 40 of the receiving device 86 is connected to another video tape recorder, instead of the monitor 26. As a result, even if there is a request to display the operation panel on the monitor 26 to operate the digital video tape recorder 22, the designation channel video data D14, the digital reproduced video data D21 and the analog reproduced video signal S19 without the graphics data D15 superimposed can be sent to another video tape recorder and recorded therein.
      With the above configuration, in the receiving device 86, the designation channel video signal S10, the digital reproduced video signal S20 and the analog reproduced video signal S19 are sent via the analog switch 73 to the first input channel of the monitor 26, and the designation channel video data D14, the digital reproduced video data D21 and the analog reproduced video data D24 are sent to the first graphics processing circuit 37 to superimpose the graphics data D15 thereon and then to the second input channel of the monitor 26. As a result, in addition to the effects of the first embodiments of the invention described above, there is an effect that the operation panel can be easily displayed on this monitor 26 only by switching the channel of the monitor 26 without need of requesting the display of the operation panel. It is possible to realize the digital broadcasting receiving system which can be enhanced in the respect of the operability.
(6) Other embodiments
   The first to fifth embodiments of the invention were described in connection with the cases where the designation channel video, the digital reproduced video and the analog reproduced video with the operation panel superimposed thereon are displayed on the monitor 26. The present invention is not limited to such cases. It should be noted that by reducing the angle of view for the designation channel video, the digital reproduced video and the analog reproduced video with respect to the angle of view on the display screen of the monitor 26, the operation panel and the designation channel video, the digital reproduced video and the analog reproduced video which are reduced in the angle of view can be displayed side by side on the monitor 26, or only the operation panel can be only displayed on the monitor 26.
   The first to fifth embodiments of the invention were described in the connection with the cases where the receiving devices 21, 62, 71, 78, 86 are provided with the first encoder 38 and the second encoder 65 to send the signal of composite type to the monitor 26. The present invention is not limited to such cases. It should be noted that the signal of component type can be sent to the monitor 26.
   Further, the first to fifth embodiments of the invention were described in the connection with the cases where the present invention is applied to the receiving devices 21, 62, 71, 78, 86 provided on the digital broadcasting receiving systems 20, 61, 70, 77, 85. The present invention is not limited to such cases. The present invention can be applied to other kinds of receiving devices as far as they can output the digital signal and the analog signal supplied from the outside.
   Further, the first to fifth embodiments of the invention were described in the connection with the cases where the digital broadcasting receiving systems 20, 61, 70, 77, 85 are provided with the analog type monitor 26. The present invention is not limited to such cases. It should be noted that the digital broadcasting receiving system can be provided with a digital type display unit.
   Further, the first to fifth embodiments of the invention were described in the connection with the cases where the digital signal accepting means for accepting the digital signal supplied from the external apparatus is the interface circuit 33. The present invention is not limited to such cases. It should be noted that other various kinds of digital signal accepting means can be applied.
   Further, the first to fifth embodiments of the invention were described in the connection with the cases where the analog signal accepting means for accepting the analog signal supplied from the external apparatus is the external input terminal 59. The present invention is not limited to such cases. It should be noted that other various kinds of analog signal accepting means can be applied.
   Further, the first to fifth embodiments of the invention were described in the connection with the cases where the generating means for generating the graphics information for operation of the external apparatus is the control portion 30, 81. The present invention is not limited to such cases. It should be noted that other various kinds of generating means can be applied.
   Further, the first to fifth embodiments of the invention were described in the connection with the cases where the output means for outputting the digital signal accepted via the digital signal accepting means or the analog signal accepted via the analog signal accepting means along with the graphics information as required is the output processor 36, 63, 72, 79, 87. The present invention is not limited to such cases. It should be noted that other various kinds of output means can be applied.
   Further, the first to fifth embodiments of the invention were described in the connection with the cases where the control portion 30, 81 is used as the control means for controlling the output means to output the digital signal accepted via the digital signal accepting means, based on the sending start information of the digital signal transmitted from the external apparatus, as well as to end the output of the digital signal, based on the sending end information of the digital signal transmitted from the external apparatus, and to output the analog signal accepted via the analog signal accepting means, based on the sending start information of the analog signal transmitted from the external apparatus, as well as to end the output of the analog signal, based on the sending end information of the analog signal transmitted from the external apparatus. The present invention is not limited to such cases. It should be noted that other various kinds of control means can be applied.
   Further, the first to fifth embodiments of the invention were described in the connection with the cases where the digital video tape recorder 22 is used as the external apparatus. The present invention is not limited to such cases. It should be noted that other various kinds of external apparatuses can be applied as far as they can supply the digital signal and the analog signal.
   As described above, according to the present invention, there is provided a receiving device for receiving the digital broadcast, comprising a digital signal accepting means for accepting a digital signal to be supplied from an external apparatus, an analog signal accepting means for accepting an analog signal to be supplied from the external apparatus, a generating means for generating the graphics information for operation of the external apparatus, and an output means for outputting the digital signal accepted by the digital signal accepting means or the analog signal accepted by the analog signal accepting means, with the graphics information as required. Thereby, even in a case where any of the digital signal and the analog signal is supplied from the external apparatus, the graphics information is output with it, and the external apparatus can be operated based on the graphics information. Thus, it is possible to realize the receiving device which can enhance the operability of the external apparatus.
   Also, according to the present invention, there is provided a receiving method of receiving the digital broadcast, comprising a first step of accepting a digital signal to be supplied from an external apparatus, or accepting an analog signal to be supplied from the external apparatus, and a second step of outputting the digital signal or the analog signal accepted at the first step, with the graphics information for operation of the external apparatus, as required. Thereby, even in a case where any of the digital signal and the analog signal is supplied from the external apparatus, the graphics information is output with it, and the external apparatus can be operated based on the graphics information. It is possible to realize the receiving method which can enhance the operability of the external apparatus.

### Industrial Applicability

The present invention can be applied to a digital broadcasting receiving system which receives digital broadcast, as a receiving device which outputs a digital signal and an analog signal supplied from external.

### Reference Numerals

20, 61, 70, 77, 85...digital broadcasting receiving system, 21, 62, 71, 78, 86...receiving device, 22...digital video tape recorder, 26...monitor, 30, 81...control portion, 33...interface circuit, 36, 63, 72, 79, 87...output processor, 37...first graphics processing circuit, 64...second graphics processing circuit, 59...external input terminal, 80...composition processing circuit, D12...TS packet data, D15...graphics data, D21...digital reproduced video data, S16...video signal, S19...analog reproduced video signal, S29...graphics signal, S30...panel composite designation channel video signal, S31...panel composite digital reproduced video signal, S32...panel composite analog reproduced video signal

## Claims

1. A receiving device for receiving digital broadcast, comprising:
digital signal accepting means for accepting a digital signal to be supplied from an external apparatus;
analog signal accepting means for accepting an analog signal to be supplied from said external apparatus;
generating means for generating graphics information for operation of said external apparatus; and
output means for outputting said digital signal accepted by said digital signal accepting means or said analog signal accepted by said analog signal accepting means with said graphics information as required.

2. The receiving device according to Claim 1, further comprising
control means for controlling said output means to output said digital signal accepted by said digital signal accepting means, based on the sending start information of said digital signal sent from said external apparatus, as well as to terminate the output of said digital signal, based on the sending end information of said digital signal sent from said external apparatus, and to output said analog signal accepted by said analog signal accepting means, based on the sending start information of said analog signal sent from said external apparatus, as well as to terminate the output of said analog signal, based on the sending end information of said analog signal sent from said external apparatus.

3. The receiving device according to Claim 1, wherein
said output means outputs the predetermined data for said digital broadcast which has been received with said graphics information as required, while outputting said digital signal or said analog signal with said graphics information as required.

4. The receiving device according to Claim 1, wherein
said output means outputs said digital signal which has been converted into analog form, or said analog signal, which is composite with said graphics information in analog form as required.

5. The receiving device according to Claim 1, wherein
said output means outputs said digital signal or said analog signal with said graphics information, while outputting said digital signal or said analog signal.

6. A receiving method of receiving digital broadcast, comprising:
a first step of accepting a digital signal to be supplied from an external apparatus, or accepting an analog signal to be supplied from said external apparatus; and
a second step of outputting said digital signal or said analog signal accepted at the first step, with the graphics information for operation of said external apparatus as required.

7. The receiving method according to Claim 6, wherein:
said first step further comprises accepting the sending start information of said digital signal or the sending start information of said analog signal which is sent from said external apparatus; and
said second step further comprises outputting said digital signal or said analog signal, based on the sending start information of said digital signal or the sending start information of said analog signal accepted at said first step, accepting the sending end information of said digital signal or the sending end information of said analog signal which is sent from said external apparatus, and terminating the output of said digital signal or said analog signal, based on the sending end information of said digital signal or the sending end information of said analog signal which has been accepted.

8. The receiving method according to Claim 6, wherein
said second step further comprises outputting said digital signal or said analog signal with said graphics information as required, while outputting the received data of said digital broadcast with said graphics information as required.

9. The receiving method according to Claim 6, wherein
said second step comprises converting said digital signal into analog form, and outputting said digital signal converted into analog form, or said analog signal, which is composite with said graphics information which is in analog form, as required.

10. The receiving method according to Claim 6, wherein
said second step comprises outputting said digital signal or said analog signal, while outputting said digital signal or said analog signal with said graphics information.
